# EUROPÄISCHE PATENTSCHRIFT

(11) **EP 0 671 249 B1**
(45) Veröffentlichungstag und Bekanntmachung des Hinweises auf die Patenterteilung: **26.01.2000**
(21) Anmeldenummer: 95810126.3
(22) Anmeldetag: 28.02.1995
(51) Int. Cl.: B29C 43/36, B29D 11/00, B29C 31/06

(54) **Verfahren und Vorrichtung zur Herstellung optischen Linsen**
Process and device for the production of optical lenses
Procédé et dispositif pour la fabrication de lentilles optiques

(30) Priorität: 07.03.1994 EP 94810141
(43) Veröffentlichungstag der Anmeldung: 13.09.1995
(73) Patentinhaber: Novartis AG, 4058 Basel (CH); Novartis-Erfindungen Verwaltungsgesellschaft m.b.H., 1235 Wien (AT)
(72) Erfinder: Haase, Lothar, D-51597 Morsbach/Sieg (DE)

(56) Entgegenhaltungen:
- US-A- 3 670 066
- US-A- 4 138 086

## Beschreibung

Die Erfindung betrifft ein Verfahren und eine Vorrichtung zur Herstellung von optischen Linsen gemäss dem Oberbegriff des jeweiligen unabhängigen Patentanspruchs 1 bzw. 5.

Optische Linsen und speziell Kontaktlinsen werden in grossen Mengen mittels Giessverfahren hergestellt, bei denen das Kontaktlinsenmaterial in die Mutterformhälfte dispensiert wird, anschliessend die Vaterformhälfte auf die Mutterformhälfte aufgesetzt und die Form geschlossen wird. Die Kavität, die zwischen der Formgebungsfläche der Mutterformhälfte und der Formgebungsfläche der Vaterformhälfte definiert wird, legt dabei die geometrische Gestalt der herzustellenden Kontaktlinse fest. Nach dem Schliessen der Form wird das in der Kavität eingeschlossene Linsenmaterial polymerisiert und auf diese Weise die Kontaktlinse hergestellt.

Üblicherweise werden dabei sogenannte Einmalformen aus Polypropylen verwendet, die nach einmaliger Benutzung entweder entsorgt oder rezykliert werden. Eine mehrfache Verwendung der Formen ist bisher nicht vorgesehen. Dies ist zum einen mit einem vergleichsweise hohen Aufwand an Material verbunden, abgesehen von der Tatsache, dass auch ein entsprechender Aufwand für die Entsorgung bzw. Rezyklierung der Formen anfällt. Zum anderen ist zwar die Genauigkeit, mit der die Linsenflächen hergestellt werden, recht hoch, es besteht hier jedoch noch ein gewisses Verbesserungspotential, da das Polypropylen aufgrund seiner Weichheit bei der Polymerisation dem Vernetzungsschwund des Linsenmaterials teilweise folgen kann, sich also verformt, was zum einen zur Folge hat, dass die Form eben nur einmal verwendet werden kann; zum anderen wird bei der Verwendung von Polypropylenformen die ursprüngliche Formgebungsfläche aber auch nicht ganz hundertprozentig auf die Linse abgebildet.

Eine weiterer Nachteil dieses Verfahrens ist, dass bis zum letzten Augenblick bevor die Form und mit ihr die Kavität geschlossen ist, die Kavität in Kontakt zur sie umgebenden Atmosphäre steht. Obwohl das Linsenmaterial die in der Kavität befindliche Luft in der Regel zuverlässig verdrängt, kann bei dieser Art der Herstellung von Kontaktlinsen trotzdem nicht ausgeschlossen werden, dass in den Kontaktlinsen Lufteinschlüsse auftreten. Die Kontaktlinsen müssen daher nach ihrer Herstellung genau auf das Vorhandensein solcher Lufteinschlüsse hin inspiziert werden. In Fällen, in denen solche Lufteinschlüsse vorhanden sind, muss die Kontaktlinse aussortiert werden und kann nicht abgegeben werden.

"Darüber hinaus sind Verfahren bekannt, bei denen mehrfach verwendbare Gussformen benutzt werden, wobei diese vorzugsweise aus Metall bestehen. Derartige Formen sind beispielsweise aus der US-A- 3,670,066 oder der US-A-4,138,086 bekannt. In der US-A-3,670,066 ist eine Gussform beschrieben, die einen konischen Stempel aufweist, der in einen entsprechend geformten Trichter eingeführt wird, wobei beim Einführen des Stempels in die Vertiefung eine Kavität entsteht. Das Material für den herzustellenden Gusskörper wird über einen Extruder in die Gussform eingebracht, dann wird der Stempel eingeführt und die Kavität geschlossen. Ein deratiges Verfahren ist zwar für thermoplastische Materialien akzeptabel, nicht jedoch für Linsenmaterialien. Die in der US-A-4,138,086 beschriebene Gussform besteht aus einer Vater- und einer Mutterformhälfte, die zusammen eine Kavität ausbilden. Das Linsenmaterial wird in die Mutterformhälfte eingegeben und dann wird durch Verschieben der Vaterformhälfte die Form geschlossen. Im Anstossbereich zwischen der Vater- und der Mutterformhälfte ist ein Loch angeordnet, durch das Luft aus der Kavität entweichen kann. Es ist hierdurch jedoch nicht sichergestellt, dass in jedem Fall Lufteinschlüsse vermieden werden."

Es ist daher eine Aufgabe der Erfindung, ein Verfahren und eine Vorrichtung vorzuschlagen, um optische Linsen und speziell Kontaktlinsen herzustellen, ohne dass es zu Lufteinschlüssen kommen kann. Weiterhin wäre es wünschenswert, wenn die Formen auch mehrfach benutzt werden können, mithin der Aufwand für die Entsorgung bzw. Rezyklierung der Polypropylenformen vermieden oder wenigstens deutlich verringert werden kann.

Diese Aufgabe wird nach der Erfindung durch ein Verfahren gemäß Anspruch 1 und durch eine Vorrichtung gemäß Anspruch 5 gelöst. Zweckmäßige Weiterbildungen der Erfindung sind in den abhängigen Ansprüchen beschrieben.

Verfahrensmässig wird eine Form verwendet, bei der an der einen Formhälfte die erste Formgebungsfläche vorgesehen ist und die andere Formhälfte ein kolbenartig dicht in ihr verschiebbares Formteil umfasst, an welchem die zweite Formgebungsfläche vorgesehen ist. Durch das Verschieben dieses Formteils auf die erste Formgebungsfläche zu wird die Kavität geschlossen. Die beiden Formhälften werden zunächst zusammengesetzt, dann wird das verschiebbare Formteil mit der zweiten Formgebungsfläche in Richtung der ersten Formgebungsfläche bewegt und das Linsenmaterial bei zusammengesetzten Formhälften zwischen die beiden Formgebungsflächen eingebracht, bevor die Kavität geschlossen ist. Durch das Einbringen von Linsenmaterial wird die Luft vom Linsenmaterial aus dem Bereich der Kavität herausgedrängt. Die Luft, die bereits von dem Linsenmaterial aus der Kavität verdrängt worden ist, wird beim Schliessen der Form über die Trennebene zwischen den beiden Formhälften herausgedrückt und kann so entweichen. Auf diesen Weise können sehr zuverlässig Linsen, die frei von Lufteinschlüssen sind, hergestellt werden.

Bei der Wahl eines geeigneten Materials für die Formhälften bzw. für das kolbenartig verschiebbare Formteil können diese mehrfach verwendet werden. Besonders beanspruchte Teile wie das kolbenartig verschiebbare Formteil können nach einer bestimmten Anzahl von hergestellten Linsen ersetzt werden. Dennoch kann mit solchen Formen eine grosse Anzahl von Linsen hergestellt werden, bevor die Formen oder einzelne Teile davon ersetzt, entsorgt bzw. rezykliert werden, was eine deutliche Verringerung des damit verbundenen Aufwands bedeutet.

In einer speziellen Verfahrensvariante wird das Linsenmaterial mittels einer Düse zwischen die Formgebungsflächen eingespritzt. Dies ermöglicht auch die Zuführung von weniger gut fliessfähigen Materialien, insbesondere auch von bereits polymerisierten, plastisch verformbaren Materialien (z.B. von Elastomeren), wenn sie mit einem entsprechenden Druck zugeführt werden. Trotz Verwendung der Technik des Einspritzens in die Form ergibt sich bei den Linsen kein Anspritzpunkt, wie er beispielsweise von der Herstellung von optischen Speicherplatten bekannt ist.

In einer Variante des Verfahrens ist die Formhälfte, die das kolbenartig verschiebbare Formteil umfasst, im wesentlichen hohlzylindrisch ausgebildet. Auf der Innenwand des Hohlzylinders weist sie eine umlaufende Nut auf. Das kolbenartig verschiebbare Formteil wird von der Seite her, die der an ihm vorgesehenen Formgebungsfläche abgewandt ist, mit Linsenmaterial beaufschlagt. Zu dem Zeitpunkt, zu dem beim Bewegen des verschiebbaren Formteils auf die Formgebungsfläche der anderen Formhälfte zu das verschiebbare Formteil von der Nut umgeben wird, wird Linsenmaterial durch die Nut hindurch, also durch den schmalen Ringspalt, der im Bereich der Nut zwischen der Innenwand des Hohlzylinders und dem verschiebbaren Formteil existiert, zwischen die Formgebungsflächen eingebracht. Dabei kann das Linsenmaterial mit einem bestimmten Druck das verschiebbare Formteil beaufschlagen und das Formteil eine definierte Zeitspanne im Bereich der Nut verbleiben, damit die gewünschte Menge an Linsenmaterial zwischen die Formgebungsflächen gelangen kann. Mit anderen Worten können hier der Druck, mit dem das Linsenmaterial das verschiebbare Formteil beaufschlagt, und die Zeitspanne, in der das Formteil im Bereich der Nut verbleibt bzw. die Geschwindigkeit, mit der es auf die andere Formhälfte zu bewegt wird, unabhängig voneinander eingestellt werden.

Grundsätzlich ist aber auch denkbar, dass der Druck, mit dem das Linsenmaterial das verschiebbare Formteil beaufschlagt, und die Abmessungen der Nut so aufeinander abgestimmt sind, dass eine gewünschte Menge an Linsenmaterial durch die Nut hindurch zwischen die Formgebungsflächen gelangt, bevor das Formteil die Nut passiert hat und kein Linsenmaterial mehr zwischen die Formgebungsflächen gelangen kann. Beide Varianten erlauben eine zuverlässige Herstellung von optischen Linsen und speziell von Kontaktlinsen, ohne dass Lufteinschlüsse auftreten und ohne Anspritzpunkte auf den Linsen.

In einer Weiterbildung der bisher geschilderten Verfahrensvarianten ist eine Formhälfte mit einem Überlauf versehen, in welchen überschüssiges Linsenmaterial beim Schliessen der Kavität gedrückt wird. Dies ist schon deshalb sehr praxisnah, weil auf diese Weise die Dosierung des Linsenmaterials nicht immer mit einer absoluten Genauigkeit erfolgen muss, sodass überhaupt auch nicht der kleinste Überschuss an Linsenmaterial vorhanden ist. Wird hingegen prinzipiell ein kleiner Überschuss an Linsenmaterial zwischen die Formgebungsflächen dosiert, so wird bereits durch das Linsenmaterial Luft aus dem Bereich der Formkavität verdrängt. Beim Schliessen der Form wird das überschüssige Linsenmaterial dann in den Überlauf gedrückt und die Luft wird, wie oben beschrieben, über die Trennflächen zwischen den beiden Formhälften herausgedrückt und entweicht. Beim anschliessenden Polymerisieren (z.B. mittels UV-Licht, Wärme oder durch Verwendung von Zwei-Komponenten-Materialien, von denen eines die Auslösung der Polymerisation bewirkt), sofern eine Polymerisation erforderlich ist und es sich nicht um ein bereits polymerisiertes Linsenmaterial (z.B. um ein Elastomer) handelt, wird das im Überlauf befindliche Linsenmaterial ebenfalls polymerisiert. Nach Beendigung des Polymerisierens und anschliessendem Öffnen der Form kann die Linse entnommen werden. Analoges gilt für den Fall, dass von vornherein ein bereits polymerisiertes, plastisch verformbares Linsenmaterial (z.B. ein Thermoplast) verwendet wird, ausser dass dann natürlich der Polymerisationsvorgang entfällt. Bevor nun nach der Herstellung und der Entnahme der Linse aus der Form aber der nächste Herstellungszyklus beginnen kann, wird das im Überlauf befindliche polymerisierte Linsenmaterial mittels einer speziellen Ausstosseinrichtung aus dem Überlauf entfernt.

Vorrichtungsmässig ist an der einen Formhälfte die erste Formgebungsfläche vorgesehen und die andere Formhälfte umfasst ein kolbenartig dicht in ihr verschiebbares Formteil, an welchem die zweite Formgebungsfläche vorgesehen ist. Durch das Verschieben des Formteils auf die erste Formgebungsfläche zu schliessen die Formgebungsflächen der beiden Formhälften die Kavität ein. Ferner weist die erfindungsgemässe Form Mittel zum Einbringen des Linsenmaterials zwischen die Formgebungsflächen auf, welche so angeordnet sind, dass sie bei bereits zusammengesetzten Formhälften das Linsenmaterial zwischen die beiden Formgebungsflächen einbringen, bevor die Kavität geschlossen ist. Die Vorteile einer solchen Form entsprechen den bereits anhand des erfindungsgemässen Verfahrens angeführten Vorteilen.

In einem Ausführungsbeispiel der Vorrichtung umfassen die Mittel zum Zuführen des Linsenmaterials eine Düse, die das Linsenmaterial zwischen die Formgebungsflächen einspritzt. Dies ermöglicht auch die Zuführung von weniger gut fliessfähigen Materialien, wie beispielsweise bereits polymerisierte, plastisch verformbare Materialien (z.B. Elastomere), wenn sie mit einem entsprechenden Druck zugeführt bzw. eingespritzt werden. Trotz Spritztechnik ergibt sich bei Linsen, die mit einer solchen Form hergestellt werden, kein Anspritzpunkt, wie er beispielsweise von der Herstellung von optischen Speicherplatten bekannt ist.

In einem anderen Ausführungsbeispiel der Vorrichtung ist die Formhälfte, die das kolbenartig verschiebbare Formteil umfasst, im wesentlichen hohlzylindrisch ausgebildet. Die Innenwand des Hohlzylinders weist eine umlaufende Nut auf. Das Linsenmaterial beaufschlagt das kolbenartige Formteil von der Seite her, die der an ihm vorgesehenen Formgebungsfläche abgewandt ist. Zu dem Zeitpunkt, zu dem beim Bewegen des kolbenartigen Formteils auf die erste Formgebungsfläche zu die Nut das kolbenartige Formteil umgibt, gelangt das Linsenmaterial durch die Nut hindurch zwischen die Formgebungsflächen. Dabei kann hier eine Zuführeinrichtung für das Linsenmaterial vorgesehen sein, welche das Linsenmaterial mit einem bestimmten Druck gegen das verschiebbare Formteil drückt. Ferner kann ein Antrieb für das Formteil vorgesehen sein, sodass es eine definierte Zeitspanne im Bereich der Nut verbleibt, damit die gewünschte Menge an Linsenmaterial zwischen die Formgebungsflächen gelangen kann. Mit anderen Worten kann hier eine einstellbare Zuführeinrichtung für das Linsenmaterial vorgesehen sein, mit der der Druck einstellbar ist, mit dem das Linsenmaterial gegen das verschiebbare Formteil gedrückt wird, sowie ein von dieser Zuführeinrichtung getrennt einstellbarer Antrieb, mit dem die Zeitspanne, in der das Formteil im Bereich der Nut verbleibt bzw. die Geschwindigkeit, mit der es auf die andere Formhälfte zu bewegt wird, unabhängig von der Zuführeinrichtung eingestellt werden kann.

Grundsätzlich ist aber auch denkbar, dass der Druck, mit dem das Linsenmaterial das verschiebbare Formteil beaufschlagt, und die Abmessungen der Nut so aufeinander abgestimmt sind, dass eine gewünschte Menge an Linsenmaterial durch die Nut hindurch zwischen die Formgebungsflächen gelangt, bevor das Formteil die Nut passiert hat und kein Linsenmaterial mehr zwischen die Formgebungsflächen gelangen kann. In diesem Fall ist prinzipiell nur noch die Zuführeinrichtung erforderlich, die das Linsenmaterial zuführt, da die Abmessungen der Nut genau so bemessen sind, dass sie bei einem bestimmten Druck eine bestimmte Menge Linsenmaterial durch die Nut hindurchströmt, bis das Formteil die Nut passiert hat. Bei beiden Arten ist eine zuverlässige Herstellung von optischen Linsen und speziell von Kontaktlinsen möglich, ohne dass Lufteinschlüsse auftreten oder Anspritzpunkte auf den Linsen existieren.

Eine praxisnahe Weiterbildung der bisher genannten Ausführungsbeispiele zeichnen sich dadurch aus, dass eine Formhälfte mit einem Überlauf versehen ist, in welchen überschüssiges Linsenmaterial beim Schliessen der Kavität hineinfliesst. Diese Weiterbildung ist schon deshalb sehr praxisnah, weil auf diese Weise die Dosierung des Linsenmaterials nicht immer mit einer absoluten Genauigkeit erfolgen muss, sodass überhaupt auch nicht der kleinste Überschuss an Linsenmaterial vorhanden ist. Wird hingegen prinzipiell ein kleiner Überschuss an Linsenmaterial zwischen die Formgebungsflächen dosiert, so wird bereits durch das Linsenmaterial Luft aus dem Bereich der Formkavität verdrängt. Beim Schliessen der Form drückt das kolbenartig verschiebbare Formteil überschüssiges Linsenmaterial dann in den Überlauf und drückt die Luft, wie oben beschrieben, über die Trennflächen zwischen den beiden Formhälften heraus, so dass diese entweicht. Das in den Überlauf gedrückte Linsenmaterial wird beim anschliessenden Polymerisieren, sofern es sich nicht um ein bereits polymerisiertes, plastisch verformbares Material, handelt, ebenfalls polymerisiert. Mittels einer Ausstosseinrichtung wird nach dem Öffnen der Form und dem Entnehmen der Linse das im Überlauf befindliche polymerisierte Linsenmaterial aus dem Überlauf herausgestossen, bevor die nächste Linse hergestellt werden kann.

Es versteht sich, dass bei dem Verfahren bzw. mit der Vorrichtung gemäss der Erfindung Linsen und speziell Kontaktlinsen hergestellt werden können, die keiner weiteren Nachbearbeitung mehr bedürfen.

Im folgenden wird die Erfdindung anhand der Zeichnung näher erläutert Es zeigen, teilweise im schematischer Darstellung und/oder im Schnitt:
- Fig. 1: ein Ausführungsbeispiel der erfindungsgemässen Vorrichtung mit den wesentlichen Teilen,
- Fig. 2: das Ausführungsbeispiel der Fig. 1 mit dem kolbenartig verschiebbaren Formteil im Bereich der Nut,
- Fig. 3: das Ausführungsbeispiel der Fig. 1 mit geschlossener Kavität,
- Fig. 4: ein weiteres Ausführungsbeispiel der erfindungsgemässen Vorrichtung mit den wesentlichen Teilen,
- Fig. 5: ein weiteres Ausführungsbeispiel der erfindungsgemässen Vorrichtung mit den wesentlichen Teilen,
und
- Fig. 6: ein weiteres Ausführungsbeispiel der erfindungsgemässen Vorrichtung.

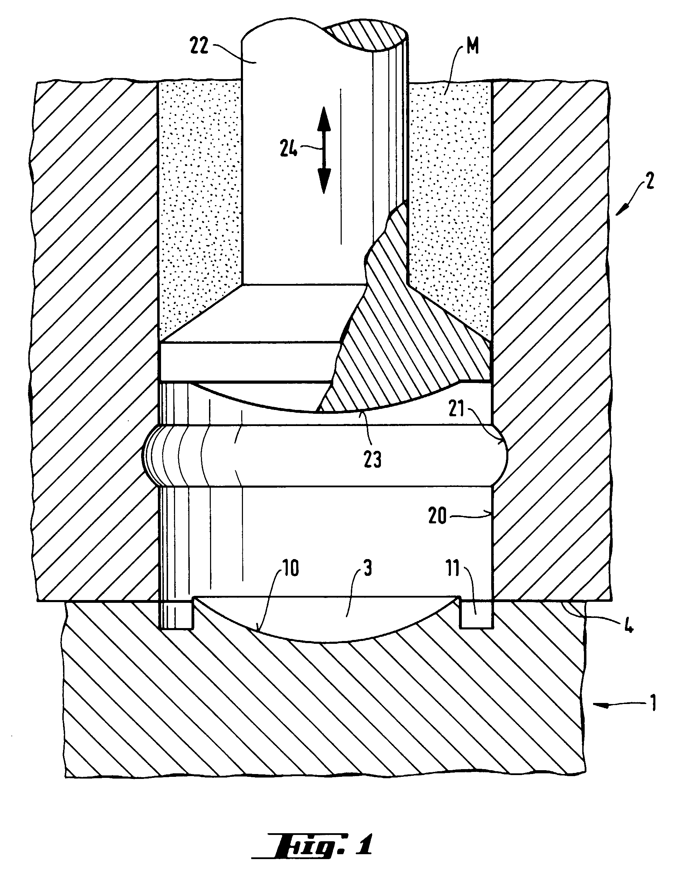

Das in Fig. 1 dargestellte Ausführungsbeispiel der erfindungsgemässen Vorrichtung umfasst eine Form mit zwei Formhälften 1 und 2. Die eine Formhälfte 1, die hier als Mutterformhälfte ausgebildet ist, umfasst eine erste Formgebungsfläche 10 und einen diese ringförmig umgebenden Überlauf 11. Die andere Formhälfte 2, die hier als Vaterformhälfte ausgebildet ist, weist eine im wesentlichen hohlzylindrische Gestalt auf. Auf der Innenwand 20 des Hohlzylinders ist eine umlaufende Nut 21 vorgesehen. Entlang der Innenwand 20 ist ein kolbenartig verschiebbares Formteil 22 vorgesehen, welches ebenfalls Bestandteil der Formhälfte 2 ist. An diesem Formteil 22 wiederum ist die zweite Formgebungsfläche 23 vorgesehen. Das Formteil 22 ist zum Öffnen und schliessen der Form in Richtung der Pfeile 24 verschiebbar. Es wird bei diesem Ausführungsbeispiel von der Seite her, die der Formgebungsfläche 23 abgewandt ist, mit Linsenmaterial M unter Druck beaufschlagt, wobei dieser Druck durch die Pfeile P symbolisch dargestellt ist.

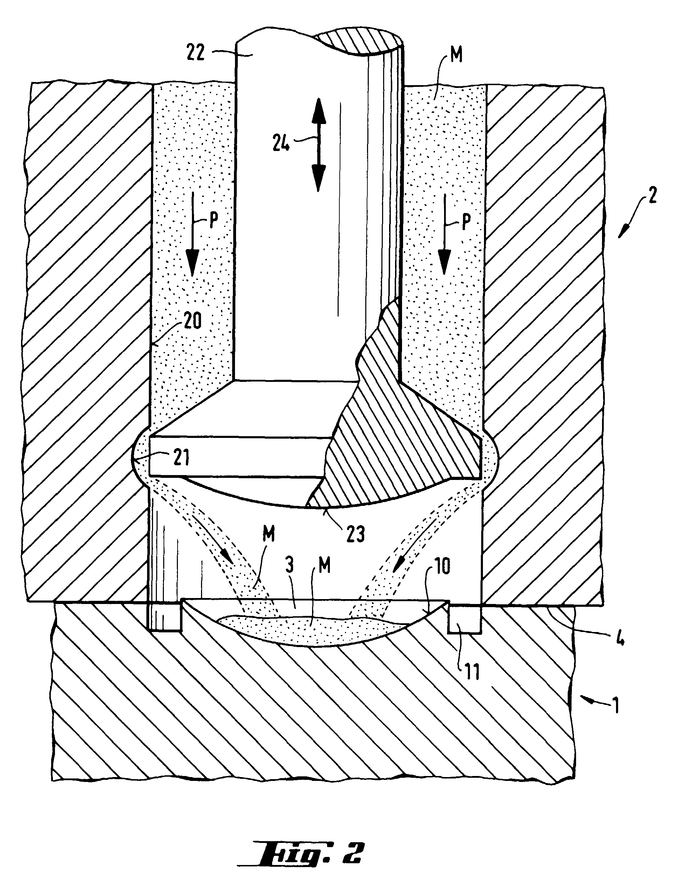

Zur Herstellung einer Linse, speziell einer Kontaktlinse, wird nun das Formteil 22 in Richtung auf die erste Formgebungsfläche 10 zubewegt. Im Verlauf dieser Bewegung erreicht das Formteil 22 eine Position im Bereich der Nut 21, in der es von der Nut 21 umgeben ist, wie dies in Fig. 2 dargestellt ist. In dieser Stellung kann nun Linsenmaterial M zwischen der Innenwand 20 und dem Formteil 22 durch die Nut 21 hindurch zwischen die Formgebungsfläche gelangen, hier in die Formgebungsfläche 10 der Mutterformhälfte hinein. Zu diesem Zweck weist die Nut 21 eine Gestalt auf, die so gewählt ist, dass das unter Druck durch sie hindurch strömende Linsenmaterial M in die Formgebungsfläche 10 der Mutterformhälfte 1 eingebracht wird. Dies ist ebenfalls in Fig. 2 zu erkennen.

Dabei kann eine Zuführeinrichtung (nicht dargestellt) für das Linsenmaterial vorgesehen sein, welche das Linsenmaterial mit einem bestimmten Druck gegen das verschiebbare Formteil drückt. Ferner kann ein Antrieb (nicht dargestellt) für das Formteil vorgesehen sein, welches das Formteil so antreibt, dass es eine genau definierte Zeitspanne im Bereich der Nut verbleibt, damit die gewünschte Menge an Linsenmaterial zwischen die Formgebungsflächen gelangen kann. Es kann also sowohl eine einstellbare Zuführeinrichtung für das Linsenmaterial M vorgesehen sein, mit der der Druck P einstellbar ist, mit dem das Linsenmaterial M gegen das verschiebbare Formteil 22 gedrückt wird, sowie ein von dieser Zuführeinrichtung getrennt einstellbarer Antrieb, mit dem die Zeitspanne, in der das Formteil 22 im Bereich der Nut 21 verbleibt bzw. die Geschwindigkeit, mit der es auf die Formhälfte 1 zu bewegt wird, unabhängig von der Zuführeinrichtung eingestellt werden kann.

Ebensogut ist es möglich, dass der Druck P, mit dem das Linsenmaterial M das verschiebbare Formteil 22 beaufschlagt, und die Abmessungen der Nut 21 so aufeinander abgestimmt sind, dass eine gewünschte Menge an Linsenmaterial M durch die Nut 21 hindurch zwischen die Formgebungsflächen 10 und 23 gelangt, bevor das Formteil 22 die Nut 21 passiert hat und kein Linsenmaterial M mehr zwischen die Formgebungsflächen 10 und 23 gelangen kann. In diesem Fall ist prinzipiell nur noch eine Zuführeinrichtung erforderlich, die das Linsenmaterial M zuführt, da die Abmessungen der Nut 21 genau so bemessen sind, dass bei einem bestimmten Druck P eine bestimmte Menge Linsenmaterial M in der Zeitspanne durch die Nut 21 hindurchströmt, in der das Formteil 22 die Nut 21 passiert. Beide Arten ermöglichen eine zuverlässige Herstellung von optischen Linsen und speziell von Kontaktlinsen, ohne dass Lufteinschlüsse auftreten oder Anspritzpunkte auf den Linsen existieren.

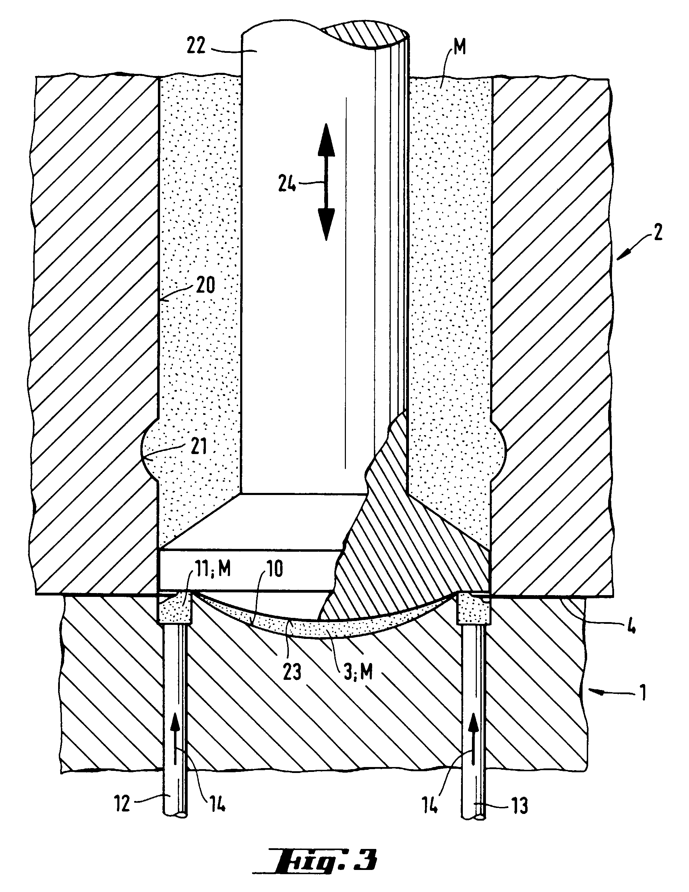

Fig. 3 schliesslich zeigt die Form in geschlossenem Zustand, in welchem das Linsenmaterial in der Kavität 3 eingeschlossen ist. Diese Kavität 3 definiert die Gestalt der herzustellenden Kontaktlinse. Man erkennt in Fig. 3, dass beim Schliessen der Form überschüssiges Linsenmaterial M in den Überlauf 11 gedrückt wird. Luft, die vorher zwischen den beiden Formgebungsflächen möglicherweise vorhanden war, wird beim Schliessen entlang der Trennebene 4 zwischen den beiden Formhälften 1 und 2 hinausgedrückt und kann so entweichen. Dadurch ist es möglich, zuverlässig Linsen ohne Lufteinschlüsse herzustellen.

Anschliessend erfolgt die Polymerisation, die je nach Material entweder durch Zufuhr von Licht, Wärme oder durch sonstige Massnahmen herbeigeführt wird, sofern das Linsenmaterial nicht ohnehin schon ein polymerisiertes, plastisch verformbares Material ist. Dabei braucht die Energie für die Polymerisation nicht auf die Formkaviät 3 zielgerichtet sein, das überschüssige Linsenmaterial im Überlauf 11 kann mitpolymerisiert werden. Es kann sogar wünschenswert sein, das im Überlauf 11 befindliche überschüssige Linsenmaterial in jedem Fall zu polymerisieren. Das Linsenmaterial auf der der Formgebungsfläche 23 abgewandten Seite hingegen wird nicht polymerisiert. Der Druck auf das Material wird dann vor dem Öffnen der Form reduziert oder ganz weggenommen. Anschliessend wird die Form geöffnet und die Linse entnommen. Das im Überlauf 11 befindliche überschüssige, polymerisierte Linsenmaterial kann nach dem Öffnen der Form und dem Entnehmen der polymerisierten Linse mittels einer Ausstosseinrichtung, welche zwei dünne Stössel 12 und 13 umfasst, die in Fig. 1 und Fig. 2 nicht dargestellt sind, aus dem Überlauf herausgestossen werden. Zu diesem Zweck werden die Stössel 12 und 13 in Richtung der Pfeile 14 bewegt. Natürlich kann diese Ausstosseinrichtung auch anders realisiert sein. Anschliessend werden die Formhälften, gegebenenfalls nach einem Reinigungsschritt, wieder zusammengesetzt und das Formteil 22 wird aufwärts bewegt, bis es die Nut 21 erreicht. Sodann wird das Linsenmaterial M wieder mit Druck beaufschlagt, sodass die gewünschte Menge an Linsenmaterial durch die Nut 21 hindurch wieder zwischen die Formhälften strömen und die nächste Linse geformt werden kann.

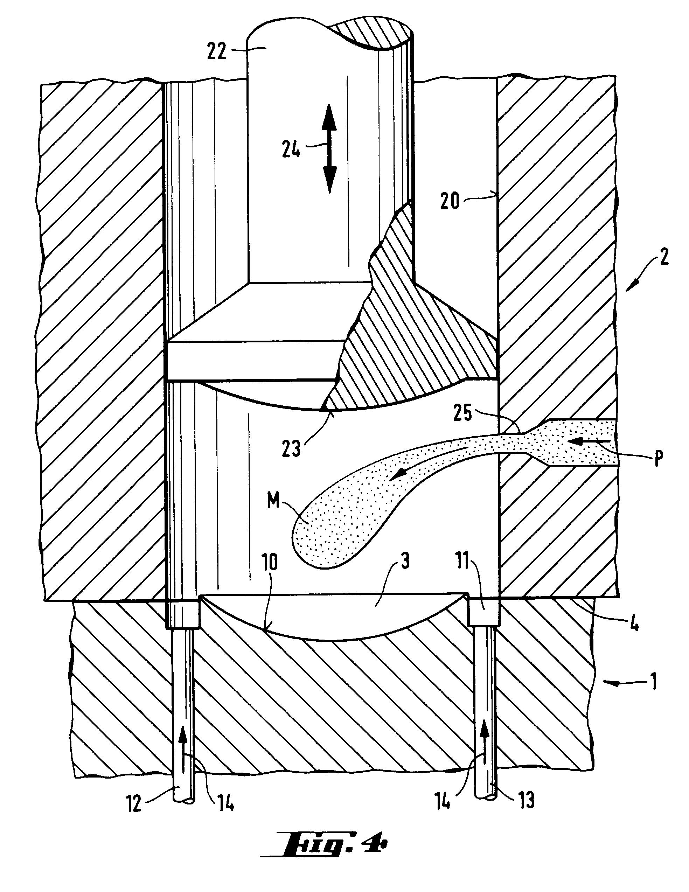

Ein weiteres Ausführungsbeispiel der erfindungsgemässen Vorrichtung ist in Fig. 4 dargestellt. Dieses Ausführungsbeispiel unterscheidet sich von dem anhand der Fig. 1-3 dargestellten Ausführungsbeispiel signifikant, dadurch, dass das Linsenmaterial M nicht von der Seite des kolbenartig verschiebbaren Formteils her, die der Formgebungsfläche abgewandt ist, zugeführt wird, sondern durch eine separate Düse 25. Durch diese Düse 25 wird das Linsenmaterial zwischen die Formhälften eingespritzt. Es ist selbstverständlich, dass bei diesem Ausführungsbeispiel keine umlaufende Nut auf der Innenwand 20 vorgesehen ist. Ansonsten kann die Form im wesentlichen gleich ausgebildet sein wie die Form, die anhand der Fig. 1-3 beschrieben ist. Insbesondere sind auch hier wieder die Stössel 12 und 13 erkennbar, mit denen im Überlauf 11 befindliches polymerisiertes Material ausgestossen wird.

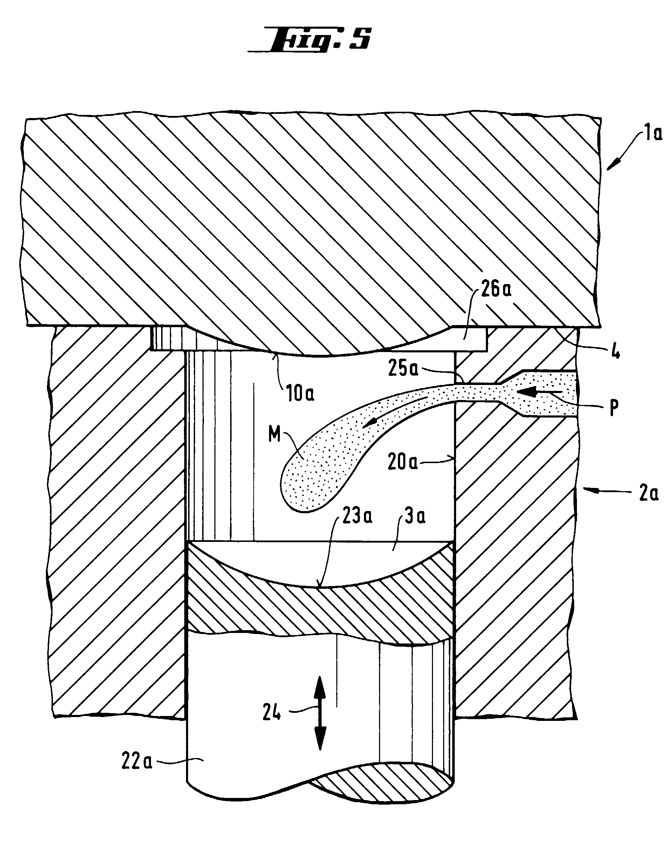

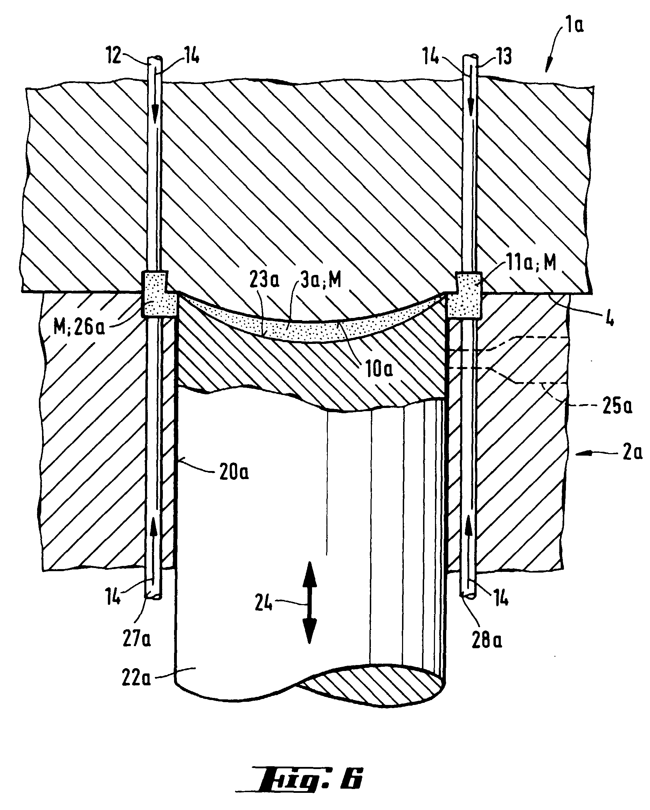

Ein weiteres Ausführungsbeispiel der erfindungsgemässen Vorrichtung ist in Fig. 5 dargestellt. Dieses Ausführungsbeispiel unterscheidet sich signifikant von den bisher erläuterten Ausführungsbeispielen dadurch, dass hier die Form im Vergleich zu den bisher erläuterten quasi "auf dem Kopf" steht. Die Formhälfte 1a ist im übrigen bei diesem Ausführungsbeispiel die Vaterformhälfte, wie man an der Formgebungsfläche 10 erkennen kann, die Formhälfte 2a stellt dementsprechend hier die Mutterformhälfte dar. Entlang der Innenwand 20a dieser Formhälfte 2a ist ebenfalls ein Formteil 22a kolbenartig verschiebbar. Die Formgebungsfläche 23a dieses Formteils 22a ist im Unterschied zu den vorher beschriebenen Formen jedoch konkav ausgebildet, da die Formhälfte 2a ja die Mutterformhälfte ist. Das Linsenmaterial M wird mittels einer Düse 25a zwischen die Formgebungsflächen 23a und 10a eingespritzt. Durch das Verschieben des Formteils 22a in Richtung auf die Formgebungsfläche 10a zu wird die mit Formkavität 3a (Fig. 6) geschlossen. Sie ist mit Linsenmaterial M gefüllt. Überschüssiges Linsenmaterial wird in den Überlauf 26a, der hier funktionsgemäss an der Formhälfte 2a vorgesehen ist, gedrückt. Luft kann wieder entlang der Trennebene 4a entweichen, ähnlich wie dies bereits anhand der vorher beschriebenen Formen erläutert worden ist.

In Fig. 6 schliesslich ist ein weiteres Ausführungsbeispiel der erfindungsgemässen Vorrichtung zu erkennen, dass sich von dem in Fig. 5 gezeigten Ausführungsbeispiel allerdings nur dadurch unterscheidet, dass zum einen beide Formhälften 1a und 2a mit einem Überlauf 11a und 26a sowie Stössel 12a,13a und 27a,28a zum Ausstossen des polymerisierten Linsenmaterials aus diesen Überlaufen versehen sind. Damit der polymerisierte Pfropfen im Überlauf 11a nicht selbständig herausfällt, kann die Seitenwand des Überlaufs 11a ganz leicht sich verjüngend ausgebildet sein, beispielsweise kann diese Verjüngung einen Winkel von ca. 0.5° einschliessen. Selbstverständlich kann sich auch der Überlauf 26a verjüngen, wenn erwünscht ist, dass der Pfropfen im Überlauf 26a nicht herausfallen soll, wenn die Formhälfte 2a zufällig einmal umgekehrt wird (z.B. damit die polymerisierte Linse herausfällt). In der Darstellung gemäss Fig. 6 soll noch angemerkt werden, dass die Düse 25a natürlich nicht in der Zeichenebene angeordnet ist, da sie sonst ja konstruktiv mit dem Stössel 28a in Konflikt käme. Sie ist aber strichliert angedeutet, um erkennen zu können, wie das Linsenmaterial M zugeführt werden kann.

Bei den beschriebenen Ausführungsbeispielen können beispielsweise Linsenmaterialien wie z.B. HEMA (Hydroxyethylmethacrylat) und einem oder mehreren UV-, Wärme- oder anderen Polymerisationsstartern verwendet werden. Auch Silikon ist grundsätzlich als Material denkbar, ebenso Thermoplaste wie z.B. PMMA (Polymethylmethacrylat) oder CAB (Celluloseacetatbutyrat) zwischen die Formhälften eingebracht werden. Grundsätzlich können flüssige wie auch mehr oder weniger pasteuse, plastisch verformbare Materialien eingebracht werden. Die eingebrachten Mengen der Materialien bewegen sich üblicherweise im Bereich von 0.05 ml bis 1000 ml. Die Drücke, mit denen das Linsenmaterial zugeführt wird, speziell bei dem Ausführungsbeispiel mit der Düse, können im Bereich von 1 bar bis 800 bar liegen. Die Formen können beispielsweise aus Metall, aus geeigneten Kunststoffen oder auch aus anderen geeigneten Materialien wie Glas oder Keramik bestehen.

Weiter oben bereits erwähnt ist, dass sich mit den beschriebenen Verfahren bzw. Vorrichtungen zuverlässig optische Linsen und speziell Kontaktlinsen herstellen lassen. Es versteht sich, dass die beschriebene Technik, auch zur Herstellung anderer Formteile geeignet ist, wenn die Formgebungsflächen bzw. geometrischen Abmessungen der einzelnen Elemente entsprechend dem gewünschten herzustellenden Gegenstand angepasst werden.

## Patentansprüche

1. Verfahren zur Herstellung von optischen Linsen, insbesondere Kontaktlinsen, bei welchem Verfahren ein Linsenmaterial (M) zwischen zwei Formhälften (1,2;1a,2a) einer Form eingebracht wird, die jeweils eine formgebende Fläche (10,23;10a,23a) aufweisen und in geschlossenem Zustand der Form eine Kavität (3,3a) einschliessen, dass nach dem Einbringen des Linsenmaterials die beiden formgebenden Flächen aufeinander zu bewegt werden und so das Linsenmaterial in der Kavität eingeschlossen wird, und dass erforderlichenfalls das in der Kavität eingeschlossene befindliche Linsenmaterial polymerisiert wird, wobei an der einen Formhälfte (1,1a) die erste Formgebungsfläche (10,10a) vorgesehen ist, dadurch gekennzeichnet, dass die andere Formhälfte (2,2a) ein kolbenartig dicht in ihr verschiebbares Formteil (22,22a) umfasst, an welchem die zweite Formgebungsfläche (23,23a) vorgesehen ist, sodass durch das Verschieben dieses Formteils (22,22a) auf die erste Formgebungsfläche (10,10a) zu die Kavität (3,3a) geschlossen wird, wobei die beiden Formhälften(1,2;1a,2a) zunächst zusammengesetzt werden, dann das verschiebbare Formteil (22,22a) mit der zweiten Formgebungsfläche (23,23a) in Richtung der ersten Formgebungsfläche (10,10a) bewegt wird und das Linsenmaterial (M) bei zusammengesetzten Formhälften zwischen die beiden Formgebungsflächen (10,23;10a,23a) eingebracht wird, bevor die Kavität (3,3a) geschlossen ist.

2. Verfahren nach Anspruch 1, dadurch gekennzeichnet, dass das Linsenmaterial mittels einer Düse (25,25a) zwischen die Formgebungsflächen (10,23;10a,23a) eingespritzt wird.

3. Verfahren nach Anspruch 1, dadurch gekennzeichnet, dass die Formhälfte (2), die das kolbenartig verschiebbare Formteil (22) umfasst, im wesentlichen hohlzylindrisch ausgebildet ist und auf der Innenwand (20) des Hohlzylinders eine umlaufende Nut (21) aufweist, dass das kolbenartig verschiebbare Formteil (22) von der Seite her, die der an ihm vorgesehenen zweiten Formgebungsfläche (23) abgewandt ist, mit Linsenmaterial (M) beaufschlagt wird, und dass zu dem Zeitpunkt, zu dem beim Bewegen des verschiebbaren Formteils (22) auf die erste Formgebungsfläche (10) zu dieses Formteil (22) von der Nut (21) umgeben wird, das Linsenmaterial (M) durch die Nut (21) hindurch zwischen die Formgebungsflächen (10,23) eingebracht wird.

4. Verfahren nach einem der Ansprüche 1 bis 3, dadurch gekennzeichnet, dass zumindest eine Formhälfte (1,2a) mit einem Überlauf (11,26a) versehen ist, in welchen überschüssiges Linsenmaterial beim Schliessen der Kavität (3,3a) gedrückt wird, dass das in den Überlauf (11,26a) gedrückte Linsenmaterial erforderlichenfalls ebenfalls polymerisiert wird, und dass nach dem Öffnen der Form das im Überlauf (11,26a) befindliche polymerisierte Linsenmaterial mittels einer speziellen Ausstosseinrichtung (12,13;27a,28a) aus dem Überlauf (11,26a) entfernt wird.

5. Vorrichtung zur Herstellung von optischen Linsen, insbesondere Kontaktlinsen, mit zwei Formhälften (1,2;1a,2a), zwischen die bei der Herstellung ein Linsenmaterial (M) eingebracht wird, wobei die Formhälften (1,2;1a,2a) jeweils eine Formgebungsfläche (10,23;10a,23a) aufweisen und diese Formgebungsflächen (10,23;10a,23a) in geschlossenem Zustand der Form eine Kavität (3,3a) bilden, die Linsenmaterial (M) einschliesst, welches erforderlichenfalls anschliessend polymerisiert wird, wobei an der einen Formhälfte (1,1a) die erste Formgebungsfläche (10,10a) vorgesehen ist, dadurch gekennzeichnet, dass die andere Formhälfte (23,23a) ein kolbenartig dicht in ihr verschiebbares Formteil (22,22a) umfasst, an welchem die zweite Formgebungsfläche (23,23a) vorgesehen ist, wobei durch das Verschieben dieses Formteils (22,22a) auf die erste Formgebungsfläche (10,10a) zu die Formgebungsflächen (10,23;10a,23a) der beiden Formhälften (1,2;1a,2a) die Kavität (3,3a) einschliessen, dass ferner Mittel (25,25a) zum Einbringen des Linsenmaterials zwischen die Formgebungsflächen (10,23;10a,23a) vorgesehen sind, welche so angeordnet sind, dass sie bei bereits zusammengesetzten Formhälften (1,2;1a,2a) das Linsenmaterial (M) zwischen die beiden Formgebungsflächen (10,23;10a,23a) einbringen, bevor die Kavität (3,3a) geschlossen ist.

6. Vorrichtung nach Anspruch 5, dadurch gekennzeichnet, dass die Mittel zum Zuführen des Linsenmaterials eine Düse (25,25a) umfassen, die das Linsenmaterial (M) zwischen die Formgebungsflächen (10,23;10a,23a) einspritzt.

7. Vorrichtung nach Anspruch 5, dadurch gekennzeichnet, dass die Formhälfte (2), die das kolbenartig verschiebbare Formteil (22) umfasst, im wesentlichen hohlzylindrisch ausgebildet ist und auf der Innenwand (20) des Hohlzylinders eine umlaufende Nut (21) aufweist, dass das Linsenmaterial (M) das kolbenartige Formteil (22) von der Seite her beaufschlagt, die der an ihm vorgesehenen zweiten Formgebungsfläche (23) abgewandt ist, und dass zu dem Zeitpunkt, zu dem beim Bewegen des kolbenartigen Formteils (22) auf die erste Formgebungsfläche (10) zu die Nut (21) das kolbenartige Formteil (22) umgibt, das Linsenmaterial (M) durch die Nut (21) hindurch zwischen die Formgebungsflächen (10,23) gelangt.

8. Vorrichtung nach einem der Ansprüche 5 bis 7, dadurch gekennzeichnet, dass zumindest eine Formhälfte (1,2a) mit einem Überlauf (11,26a) versehen ist, in welchen überschüssiges Linsenmaterial beim Schliessen der Kavität (3,3a) hineinfliesst, dass das in den Überlauf (11,26a) geflossene Linsenmaterial erforderlichenfalls ebenfalls polymerisiert wird, und dass eine Ausstosseinrichtung (12,13;27a,28a) vorgesehen ist zum Entfernen des im Überlauf (11,26a) befindlichen polymerisierten Linsenmaterials.

## Claims

1. A process for the production of optical lenses, in particular contact lenses, in which process a lens material (M) is introduced between two mould halves (1, 2; 1a, 2a) of a mould each of which has a moulding surface (10, 23; 10a, 23a) and which enclose a cavity (3, 3a) in the closed state of the mould, after the lens material has been introduced the two moulding surfaces are moved towards each other, thereby enclosing the lens material in the cavity, and, if necessary, the lens material enclosed in the cavity is polymerised, the first moulding surface (10, 10a) being provided on the one mould half (1, 1a), wherein the other mould half (2, 2a) comprises a mould part (22, 22a) that is movable inside it with a close fit in the manner of a piston and on which the second moulding surface (23, 23a) is provided, so that by moving said mould part (22, 22a) towards the first moulding surface (10, 10a) the cavity (3, 3a) is closed, the two mould halves (1, 2; 1a, 2a) first being assembled, then the movable mould part (22, 22a) which has the second moulding surface (23, 23a) being moved in the direction towards the first moulding surface (10, 10a) and, with the mould halves assembled, the lens material (M) being introduced between the two moulding surfaces (10, 23; 10a, 23a) before the cavity (3, 3a) is closed.

2. A process according to claim 1, wherein the lens material is injected between the moulding surfaces (10, 23; 10a, 23a) by means of a nozzle (25, 25a).

3. A process according to claim 1, wherein the mould half (2) comprising the mould part (22) that is movable in the manner of a piston is essentially hollow-cylindrical in construction and has, on the inside wall (20) of the hollow cylinder, an encircling groove (21), the mould part (22) that is movable in the manner of a piston is acted upon by lens material (M) from the side facing away from the second moulding surface (23) provided on it, and, at the point when, as the movable mould part (22) is moved towards the first moulding surface (10), said mould part (22) is surrounded by the groove (21), the lens material (M) is introduced between the moulding surfaces (10, 23) through the groove (21).

4. A process according to any one of claims 1 to 3, wherein at least one mould half (1, 2a) is provided with an overflow (11, 26a) into which excess lens material is pressed as the cavity (3, 3a) is closed, if necessary the lens material pressed into the overflow (11, 26a) is likewise polymerised and, after opening of the mould, the polymerised lens material present in the overflow (11, 26a) is removed from the overflow (11, 26a) by means of a special ejection device (12, 13; 27a, 28a).

5. An apparatus for the production of optical lenses, in particular contact lenses, comprising two mould halves (1, 2; 1a, 2a) between which a lens material (M) is introduced during the production, the mould halves (1, 2; 1a, 2a) each having a moulding surface (10, 23; 10a, 23a) and said moulding surfaces (10, 23; 10a, 23a) forming a cavity (3, 3a) which encloses the lens material (M) in the closed state of the mould, which lens material (M) is subsequently polymerised if necessary, the first moulding surface (10, 10a) being provided on the one mould half (1, 1a), wherein the other mould half (23, 23a) comprises a mould part (22, 22a) that is movable inside it with a close fit in the manner of a piston and on which the second moulding surface (23, 23a) is provided, and, by moving said mould part (22, 22a) towards the first moulding surface (10, 10a), the moulding surfaces (10, 23; 10a, 23a) of the two mould halves (1, 2; 1a, 2a) enclose the cavity (3, 3a), and wherein means (25, 25a) are further provided for introducing the lens material between the moulding surfaces (10, 23; 10a, 23a), which means (25, 25a) are so arranged that, with the mould halves (1, 2; 1a, 2a) already assembled, they introduce the lens material (M) between the two moulding surfaces (10, 23; 10a, 23a) before the cavity (3, 3a) is closed.

6. An apparatus according to claim 5, wherein the means for feeding the lens material comprise a nozzle (25, 25a) which injects the lens material (M) between the moulding surfaces (10, 23; 10a, 23a).

7. An apparatus according to claim 5, wherein the mould half (2) comprising the mould part (22) that is movable in the manner of a piston is essentially hollow-cylindrical in construction and has, on the inside wall (20) of the hollow cylinder, an encircling groove (21), the lens material (M) acts upon the piston-like mould part (22) from the side facing away from the second moulding surface (23) provided on it, and, at the point when, as the piston-like mould part (22) is moved towards the first moulding surface (10), the groove (21) surrounds the piston-like mould part (22), the lens material (M) enters between the moulding surfaces (10, 23) through the groove (21).

8. An apparatus according to any one of claims 5 to 7, wherein at least one mould half (1, 2a) is provided with an overflow (11, 26a) into which excess lens material flows as the cavity (3, 3a) is closed, the lens material that has flowed into the overflow (11, 26a) is likewise polymerised if necessary, and an ejection device (12, 13; 27a, 28a) is provided for removing the polymerised lens material present in the overflow (11, 26a).

## Revendications

1. Procédé de fabrication de lentilles optiques, en particulier de lentilles de contact, dans lequel on introduit un matériau de lentille (M) entre deux demi-moules (1,2; 1a,2a) d'un moule, qui présentent chacune une surface de formage (10,23; 10a,23a) et qui délimitent à l'état fermé une cavité (3,3a), de manière qu'après introduction du matériau de lentille les deux surfaces de formages soient déplacées l'une sur l'autre et enferment ainsi le matériau de lentille dans la cavité, et que si nécessaire le matériau de lentille se trouvant dans la cavité soit polymérisé, où sur la première moitié de moule (1,1a) est prévue la première surface de formage (10,10a), caractérisé en ce que l'autre moitié de moule (2,2a) présente une pièce profilée en forme de piston qui peut y glisser de manière hermétique (22,22a), et sur laquelle est prévue la seconde surface de formage (23,23a), si bien que par le glissement de cette pièce profilée (22,22a) sur la première surface de formage (10,10a) la cavité (3,3a) est fermée, les deux moitiés de moule (1,2; 1a,2a) étant ensuite assemblées, puis la pièce profilée apte à glisser (22,22a) étant déplacée avec la seconde surface de formage (23,23a) en direction de la première surface de formage (10,10a) et le matériau de lentille (M) étant introduit lorsque les moitiés de moule sont assemblées entre les deux surfaces de formage (10,23; 10a,23a) avant que la cavité (3,3a) ne soit fermée.

2. Procédé selon la revendication 1, caractérisé en ce que le matériau de lentille est projeté au moyen d'une buse (25,25a) entre les surfaces de formage (10,23; 10a,23a).

3. Procédé selon la revendication 1, caractérisé en ce que la moitié de moule (2) qui comprend la pièce profilée en forme de piston capable de glisser (22) est essentiellement en forme de cylindre creux et présente sur la paroi interne (20) du cylindre creux une rainure circulaire (21) qui est alimentée avec du matériau de lentille (M) par le côté qui est opposé à la seconde surface de formage (23) qui y est prévue, et en ce qu'au moment où lors du déplacement de la pièce profilée apte à glisser (22) sur la première surface de formage (10) cette pièce profilée (22) est entourée par la rainure (21), le matériau de lentille (M) est introduit par la rainure (21) entre les surfaces de formage (10,23).

4. Procédé selon l'une des revendications 1 à 3, caractérisé en ce qu'au moins un demi-moule (1,2a) est muni d'un trop-plein (11,26a) dans lequel l'excès de matériau de lentille est poussé lors de la fermeture de la cavité (3,3a), en ce que le matériau de lentille poussé dans le trop-plein (11,26a) est également si nécessaire polymérisé, et en ce qu'après ouverture du moule le matériau de lentille polymérisé se trouvant dans le trop-plein (11,26a) est retiré du trop-plein (11,26a) au moyen d'un dispositif d'expulsion spécial (12,13;27a,28a).

5. Dispositif de fabrication de lentilles optiques, en particulier de lentilles de contact, avec deux demi-moules (1,2;1a,2a) entre lesquels lors de la fabrication est introduit un matériau de lentille (M), où les demi-moules (1,2;1a,2a) présentent à chaque fois une surface de formage (10,23;10a,23a) et ces surfaces de formage (10,23;10a,23a) tonnent à l'état fermé du moule une cavité (3,3a) qui inclut le matériau de lentille (M), lequel est si nécessaire ensuite polymérisé, où sur une moitié de moule (1,1a) est prévue la première surface de formage (10,10a), caractérisé en ce que l'autre moitié de moule (23,23a) comprend une pièce profilée (22,22a) en forme de piston qui peut y glisser de façon hermétique, et sur laquelle est prévue la seconde surface de formage (23,23a), où de par le glissement de cette pièce profilée (22,22a) sur la première surface de formage (10,10a) les surfaces de formage (10,23;10a,23a) des deux demi-moules (1,2;1a,2a) ferment la cavité (3,3a), en ce qu'en outre sont prévus pour l'introduction du matériau de lentille entre les surfaces de formage (10,23;10a,23a) des moyens (25,25a) qui sont disposés de manière que lorsque les demi-moules (1,2;1a,2a) sont déjà assemblés ils introduisent le matériau de lentille (M) entre les deux surfaces de formage (10,23;10a,23a) avant que la cavité (3,3a) ne soit fermée.

6. Dispositif selon la revendication 5, caractérisé en ce que les moyens d'apport du matériau de lentille comprennent une buse (25,25a) qui projette le matériau de lentille (M) entre les surfaces de formage (10,23;10a,23a).

7. Dispositif selon la revendication 5, caractérisé en ce que le demi-moule (2) qui comprend la pièce profilée (22) en forme de piston apte à glisser a essentiellement une forme de cylindre creux et présente à la paroi interne (20) du cylindre creux une rainure circulaire (21), en ce que le matériau de lentille (M) alimente la pièce profilée en forme de piston (22) par le côté qui est opposé à la seconde surface de formage (23) qui y est prévue, et en ce qu'au moment où lors du déplacement de la pièce profilée en forme de piston (22) sur la première surface de formage (10) la rainure (21) entoure la pièce profilée en forme de piston (22), le matériau de lentille (M) aboutit par l'intermédiaire de la rainure (21) entre les surfaces de formage (10,23).

8. Dispositif selon l'une des revendications 5 à 7, caractérisé en ce qu'au moins un demi-moule (1,2a) est muni d'une rainure (11,26a) dans laquelle s'écoule l'excès de matériau de lentille lors de la fermeture de la cavité (3,3a), en ce que le matériau de lentille qui s'est écoulé dans le trop-plein (11,26a) est également si nécessaire polymérisé, et en ce qu'un dispositif d'expulsion (12,13;27a,28a) est prévu pour éliminer le matériau de lentille polymérisé se trouvant dans le trop-plein (11,26a).
